# FASCICULE DE BREVET EUROPEEN

(11) **EP 1 600 525 B1**
(45) Date de publication et mention de la délivrance du brevet: **26.02.2020**
(21) Numéro de dépôt: 05291143.5
(22) Date de dépôt: 27.05.2005
(51) Int. Cl.: C23C 10/02, C23C 10/58, C23C 28/00, C23C 28/02, B05D 5/00

(54) **PROCÉDÉ DE FABRICATION OU DE RÉPARATION D'UN REVÊTEMENT SUR UN SUBSTRAT MÉTALLIQUE**
VERFAHREN ZUR HERSTELLUNG ODER REPARATUR EINER BESCHICHTUNG AUF EINEM METALLISCHEN SUBSTRAT
PROCESS FOR MAKING OR REPAIRING A COATING ON A METALLIC SUBSTRATE

(30) Priorité: 28.05.2004 FR 0405778
(43) Date de publication de la demande: 30.11.2005
(73) Titulaire: Safran Aircraft Engines, 75015 Paris (FR)
(72) Inventeur: Richin, Chaterine, 91410 Roinville sous Dourdan (FR); Siccat, Alain, 91070 Bondoufle (FR)
(74) Mandataire: Cabinet Beau de Loménie

(56) Documents cités:
- US-A- 4 537 927
- US-A- 5 043 378
- US-B1- 6 482 469

## Description

L'invention concerne un procédé de fabrication ou de réparation d'un revêtement sur un substrat métallique.

La recherche de l'augmentation du rendement des turbomachines, en particulier dans le domaine aéronautique, et de la diminution de la consommation en carburant et des émissions polluantes de gaz et d'imbrûlés ont conduit à se rapprocher de la stoéchiométrie de combustion du carburant. Cette situation s'accompagne d'une augmentation de la température des gaz sortant de la chambre de combustion en direction de la turbine.

En conséquence, il a fallu adapter les matériaux de la turbine à cette élévation de température, en perfectionnant les techniques de refroidissement des aubes de turbines (aubes creuses) et/ou en améliorant les propriétés de résistance aux températures élevées de ces matériaux. Cette deuxième voie, en combinaison avec l'utilisation des superalliages à base de nickel et/ou de cobalt, a conduit à plusieurs solutions parmi lesquelles le dépôt d'un revêtement isolant thermique dénommé barrière thermique.

Ce type de revêtement de céramique qui forme une barrière thermique permet de créer sur une pièce refroidie, en régime permanent de fonctionnement, un gradient thermique au travers du revêtement, dont l'amplitude totale peut dépasser 200°C pour un revêtement de 150 µm d'épaisseur environ. La température de fonctionnement du métal sous-jacent formant le substrat pour le revêtement se trouve diminuée du même gradient, ce qui induit des gains important sur le volume d'air de refroidissement nécessaire, la durée de vie de la pièce et la consommation spécifique du moteur à turbine.

Parmi les revêtements utilisés, on citera une céramique à base de zircone stabilisée à l'oxyde d'yttrium.

Il est bien entendu qu'il peut être prévu, afin d'améliorer les propriétés de la barrière thermique, notamment les propriétés de liaison avec le substrat et/ou de protection contre l'oxydation du métal du substrat, de prévoir dans ce revêtement, entre le substrat et la couche externe du revêtement, une sous-couche.

En particulier, il est connu d'utiliser une sous-couche formée d'un alliage de type MCrAlY, M étant un métal choisi parmi le nickel, le cobalt, le fer ou un mélange de ces métaux, qui consiste en une matrice gamma de nickel cobalt avec, en solution, du chrome contenant des précipités β NiAl.

Il est également connu d'utiliser une sous-couche formée d'un ou de plusieurs aluminiures, comprenant en particulier un aluminiure de nickel contenant éventuellement un métal choisi parmi le platine, le chrome, le palladium, le ruthénium, l'iridium, l'osmium, le rhodium, ou un mélange de ces métaux et/ou un élément réactif choisi parmi le zirconium (Zr), le hafnium (Hf) et l'yttrium (Y). Par exemple, on utilise un revêtement de type Ni₍₁₋ₓ₎PtₓAl dans lequel le platine est en insertion dans le réseau du nickel. Le platine est déposé par voie électrolytique avant le traitement thermochimique d'aluminisation.

Habituellement, les revêtements de céramique sont déposés sur la pièce à revêtir soit par une technique de projection (en particulier projection plasma) ou de dépôt par voie physique en phase vapeur, c'est-à-dire par évaporation (en particulier par EB-PVD ou « Electron Beam Physical Vapour Déposition » formant un revêtement déposé dans une enceinte d'évaporation sous vide sous bombardement électronique).

Dans le cas d'un revêtement projeté, un dépôt d'oxyde à base de zircone est effectué par des techniques du type projection plasma, ce qui conduit à la formation d'un revêtement constitué d'un empilement de gouttelettes fondues puis trempées par choc, aplaties et empilées de façon à former un dépôt densifié de manière imparfaite d'une épaisseur généralement comprise entre 50 micromètres et 1 millimètre.

Un revêtement déposé par voie physique, et en particulier par évaporation sous bombardement électronique, engendre un revêtement constitué d'un assemblage de colonnettes dirigées sensiblement de manière perpendiculaire à la surface à revêtir, sur une épaisseur comprise entre 20 et 600 micromètres. Avantageusement, l'espace entre les colonnettes permet au revêtement de compenser efficacement les sollicitations thermomécaniques dues, aux températures de service, au différentiel de dilatation avec le substrat en superalliage et aux contraintes mécaniques centrifuges de rotation des aubes.

Egalement, il est parfois mis en œuvre, pour l'obtention d'un revêtement et/ou de la sous-couche du revêtement, une étape consistant à modifier la surface de la pièce en superalliage en déposant une couche de platine de plus de 10 micromètres puis à effectuer un traitement thermique de diffusion.

Aussi, la société demanderesse utilise un revêtement thermochimique dénommé C1A formé par un revêtement d'aluminiure modifié par du chrome et résultant de la réalisation successives de deux étapes de dépôt en phase vapeur : une première étape de dépôt d'une couche de 2 à 6 micromètres de chrome suivie d'une étape d'aluminisation.

Un tel revêtement est plutôt utilisé comme revêtement pour protéger les pièces de l'oxydation ou de la corrosion à chaud, ou, éventuellement, comme sous-couche de barrière thermique.

Ainsi, on obtient des pièces avec des durées de vie élevées en fatigue thermique à haute température.

Classiquement, les revêtements formant des barrières thermiques créent donc une discontinuité de conductivité thermique entre la couche extérieure de la pièce mécanique, comprenant cette barrière thermique, et le substrat de ce revêtement formant le matériau constitutif de la pièce.

Cependant, ces revêtements, qu'ils soient de type barrière thermique ou protecteur de la corrosion à chaud ou de l'oxydation, sont obtenus par des procédés (projection et/ou de dépôt par voie physique en phase vapeur et/ou par voie électrolytique) complexes et coûteux.

De plus, en cas d'endommagement localisé de ces revêtements, que ce soit en cours de fabrication ou en cours de fonctionnement, une réparation locale n'étant pas possible, on procède alors au reconditionnement du revêtement dans sa totalité ce qui pose d'autres problèmes. En effet, les opérations de décapage sont délicates car elles conduisent à une diminution de l'épaisseur du substrat et à une augmentation des ouvertures, donc corrélativement à une diminution de la durée de vie des pièces revêtues. Après le décapage, on recommence les étapes de fabrication du revêtement sur l'ensemble de la surface de la pièce de sorte que des zones saines ont subit inutilement des opérations risquées d'enlèvement et de reconditionnement. De plus, une quantité d'un métal ou de plusieurs métaux précieux (platine, chrome...............) est alors perdue.

Il faut noter aussi, des zones d'usure particulières pour certaines pièces, en particulier les bords d'attaque et les bords de fuite pour les aubes dans le domaine aéronautique, que ce soit les aubes de soufflante, de compresseur et/ou de turbine d'un turbomoteur.

Dans ce cas, il peut se produire des criques, des disparitions locale de la couche externe, voire de la sous-couche, entraînant des oxydations de la pièce. Ces détériorations peuvent nécessiter une réparation totale de la pièce qui consiste à enlever l'ancien revêtement, à nettoyer la pièce, à le reconstituer, et à réédifier un nouveau revêtement. Ces opérations très coûteuses sont tout de même mises en œuvre du fait du coût élevé total de la pièce.

Dans certains cas, l'enlèvement mécanique de ce revêtement (sous-couche et couche externe dans le cas d'une barrière thermique), ainsi que le reconditionnement de ce revêtement peuvent se faire sur une partie seulement de la pièce, sur une surface toutefois généralement assez importante.

La présente invention a pour objectif de fournir un procédé permettant de surmonter les inconvénients de l'art antérieur et en particulier offrant la possibilité de réparer un revêtement sans avoir à le retirer entièrement ou même sur une grande surface.

A cet effet, selon la présente invention, le procédé est défini par l'objet des revendications 1 et 2.

Par métal de la mine du platine ou platinoïde, on entend le platine, le palladium, l'iridium, l'osmium, le rhodium ou le rhuténium.

De cette manière, on comprend que par la simple application d'une ou de plusieurs couches de peinture, avec une étape de séchage intermédiaire, on s'affranchit de tous les problèmes liés aux procédés complexes (projection et/ou de dépôt par voie physique en phase vapeur et/ou par voie électrolytique) utilisés jusqu'alors pour déposer ledit métal précieux choisi qui fait partie du revêtement.

Cette solution présente aussi l'avantage supplémentaire, de permettre, outre la fabrication du revêtement, également, la réparation localisée de ce dernier dans une zone strictement limitée à celle qui est endommagée, sans modifier les caractéristiques de surface, ni la continuité des propriétés du revêtement.

Globalement, grâce à la solution selon la présente invention, il est possible de s'affranchir d'un grand nombre de limitations et d'inconvénients dus aux techniques de dépôt complexes utilisées jusqu'alors pour déposer le métal choisi, soit directement sur le substrat comme première étape, soit sur une sous-couche du revêtement qui est elle placée directement sur le substrat, au cours du procédé de fabrication ou de réparation du revêtement.

Ce dépôt du métal de la pré-couche du revêtement par le biais d'une peinture peut se réaliser par application de ladite peinture au pinceau, au pistolet, au tampon et/ou par immersion (au trempé).

D'autres avantages et caractéristiques de l'invention ressortiront à la lecture de la description suivante d'exemples d'application du procédé de la présente invention cités de manière non limitative.

Parmi les revêtements utilisés en particulier de préférence sans sous-couche, on rencontre en premier lieu le revêtement thermochimique d'aluminiure dénommé C1A formé par la réalisation successives de deux étapes de dépôt en phase vapeur : une première étape de dépôt d'une couche de 2 à 6 micromètres de chrome suivie d'une étape d'aluminisation.

L'ordre de réalisation de ces deux dépôts est stricte puisqu'il est impossible de déposer en phase vapeur du chrome sur de l'aluminium.

Or, après fonctionnement, en cas de besoin de réparation locale, il est impossible de refaire le dépôt à l'identique de manière limitée à cette zone, puisque pendant la phase de chromisation, c'est l'aluminium de la pièce qui serait évaporée. En conséquence, actuellement les réparations d'un revêtement C1A ne sont possibles que par dépôt d'un revêtement simple d'aluminium qui est donc moins performant notamment en corrosion à chaud.

Dans le cadre de la présente invention, on prévoit localement sur le substrat nu, l'application d'une pré-couche de platine en remplacement du premier dépôt de chrome par application d'une ou de plusieurs couches d'une peinture contenant du platine. Une aluminisation ultérieure suivie d'un traitement thermique de diffusion aboutit à la formation d'un revêtement d'aluminiure de platine aux performances de tenue largement supérieures au revêtement d'aluminium simple.

D'une manière plus générale, dans cette première application du procédé selon la présente invention, on réalise un procédé de réparation, caractérisé en ce que ledit revêtement à réparer est de type C1A obtenu par un dépôt préalable de chrome sur le substrat suivi d'une étape d'aluminisation en phase vapeur sur le chrome, et en ce que dans la ou les zones à réparer du revêtement, on procède selon les étapes suivantes :
a) retrait complet du revêtement altéré mettant à nu le substrat,
b) formation de ladite pré-couche sur le substrat par application d'une ou de plusieurs couches d'une peinture contenant au moins un métal choisi parmi le groupe constitué des métaux de la mine du platine (platinoïdes) et du chrome, et
c) aluminisation en phase vapeur sur la pré-couche, ce par quoi on obtient ledit aluminiure du métal choisi.

Ainsi, on comprend que seule la ou les zones à réparer ont été traitées, ce qui d'une part est moins coûteux et, d'autre part, évite d'endommager ou d'altérer les zones qui étaient en bon état avant l'étape de réparation.

Egalement, dans cette première application du procédé selon la présente invention, tout le revêtement peut être fabriqué dès le départ en recourant à la solution de la présente invention. Dans ce cas, le procédé de fabrication est caractérisé en ce que ledit revêtement comporte un aluminiure du métal choisi résultant des étapes suivantes :
a) formation de la pré-couche sur le substrat par application d'une ou de plusieurs couches d'une peinture contenant au moins un métal choisi parmi le groupe constitué des métaux de la mine du platine (platinoïdes) et du chrome, et
b) aluminisation en phase vapeur sur la pré-couche, ce par quoi on obtient ledit aluminiure du métal choisi.

Eventuellement, de façon complémentaire, on peut prévoir une étape supplémentaire c) de diffusion par traitement thermique.

Parmi les revêtements, on rencontre en second lieu des revêtements utilisés à titre de barrière thermique avec sous-couche.

Dans ce cas, ledit revêtement comporte une sous-couche de liaison dont l'obtention comporte la formation de ladite pré-couche par application d'une ou de plusieurs couches d'une peinture contenant au moins un métal choisi parmi le groupe constitué des métaux de la mine du platine (platinoïdes) et du chrome.

Dans une mise en œuvre particulière qui ne fait pas partie de l'invention, dans le cas des revêtements avec sous-couche de liaison, ladite sous-couche de liaison résulte entièrement de la formation de la pré-couche sur le substrat par application d'une ou de plusieurs couches d'une peinture contenant au moins un métal choisi parmi le groupe constitué des métaux de la mine du platine (platinoïdes) et du chrome, puis d'un traitement thermique de diffusion.

Ainsi, la disposition qui précède est notamment mise en œuvre dans le cas où la sous-couche consiste seulement à modifier la surface du superalliage formant le substrat métallique, en déposant selon le principe de l'invention par application de multiples couches de peinture, une couche de platine assez épaisse de 10 micromètres ou plus, puis à effectuer un traitement thermique de diffusion.

Parmi les revêtements avec sous-couche de liaison, il existe des sous-couches à base d'aluminiure. En effet, on parle dans ce cas de systèmes alumino-formeurs, c'est-à-dire qui forment en s'oxydant un film d'alumine protecteur adhérent et isolant le métal de l'environnement oxydant. Le film d'alumine formé par les sous-couches a vocation à former une couche assimilable à une couche de colle du revêtement céramique et une fonction de protection du substrat. L'addition d'un métal précieux tel que le platine aux revêtements protecteurs et/ou aux sous-couches de revêtement/barrière thermique a pour effet d'améliorer la qualité de la sous-couche formée et de promouvoir l'adhérence sur le métal.

Dans ce cas, selon une première variante qui ne fait pas partie de l'invention, ladite sous-couche de liaison résulte de la formation de la pré-couche sur le substrat par application d'une ou de plusieurs couches d'une peinture contenant au moins un métal choisi parmi le groupe constitué des métaux de la mine du platine (platinoïdes) et du chrome, puis d'une aluminisation en phase vapeur sur la pré-couche, et, éventuellement, d'un traitement de diffusion thermique.

Ici, comme dans une grande partie des cas, le substrat métallique est un superalliage, de sorte que l'on obtient par réaction avec le nickel du substrat une sous-couche de liaison de type aluminiure NiAI de structure intermétallique, formant des composés définis à 50% atomique de nickel et d'aluminium. Grâce à la pré-couche contenant au moins un métal choisi parmi le groupe constitué des métaux de la mine du platine (platinoïdes) et du chrome, on obtient un revêtement d'aluminiure modifié par un métal précieux, de type Ni(₁₋ₓ)PtₓAl. En particulier si le métal choisi est du platine, on obtient une structure dans laquelle le platine est en insertion dans le réseau du nickel.

Parmi les revêtements avec sous-couche de liaison à base d'aluminiure, on rencontre une deuxième variante, dans laquelle ladite sous-couche de liaison est du type alliage de type MCrAlY, M étant un métal choisi parmi le nickel, le cobalt, le fer ou un mélange de ces métaux, ladite sous-couche étant modifiée par formation, à sa surface, de ladite pré-couche par application d'une ou de plusieurs couches d'une peinture contenant au moins un métal choisi parmi le groupe constitué des métaux de la mine du platine (platinoïdes) et du chrome, puis par un traitement thermique de diffusion.

D'une manière générale, ladite pré-couche est formée avec une épaisseur comprise entre 1 et 30 µm, de préférence entre 2 et 10 µm.

La peinture utilisée est donc, par définition, une suspension de matières solides dans un liquide, les matières solides étant formées ici de particules (poudre de métal) du métal choisi parmi le groupe constitué des métaux de la mine du platine (platinoïdes) et du chrome.

Le liquide peut être une base aqueuse, ne laissant aucun dépôt après séchage, ou bien à base d'huile ou de résine, ou de tout autre (mélange) (d')hydrocarbure(s), ou encore une émulsion huile-eau, le passage à haute température lors de la cuisson pendant la fabrication ou lors du premier fonctionnement de la pièce dégradant les composés hormis le métal.

Différents essais ont été menés mettant en œuvre de manière satisfaisante le procédé selon la présente invention, parmi lesquels l'exemple suivant.

Cet essai a été mené dans le cas d'une réparation d'un revêtement de type Ni₍₁₋ₓ₎PtₓAl. Au lieu de déposer le platine par voie électrochimique, le dépôt a été mis en œuvre par application de la peinture présentée ci-après, avant l'étape thermochimique d'aluminisation.

Il a été utilisé une peinture de la société HERAUS contenant 8% en masse de platine sous forme de poudre (diamètre moyen de l'ordre de 2 µm). Cette peinture très fluide est réalisé dans un liant terpénique, en solution dans d'autres solvants.

C'est une peinture classiquement utilisée pour la décoration de céramiques type vaisselle.

Vingt couches de peintures ont été appliquées au pinceau avec une période intermédiaire de séchage à l'air de 10 à 15 minutes, puis sur plaque chauffante à 200°C pendant 5 minutes et enfin dans un four pendant 15 minutes à 600°C.

Une étape de cuisson à 700°C pendant 15 minutes dans un four a été ensuite effectuée.

L'étape d'aluminisation a été réalisée à 1050°C pendant 5 heures selon la procédure suivante :l'éprouvette est placée dans une boîte d'aluminisation contenant du cément donneur d'aluminium, une quantité suffisante de NH₄F étant ajoutée.

Ensuite, l'étape de diffusion a consisté à placer l'échantillon à 1050°C pendant une heure.

Après analyse, l'aluminisation est confirmée par la présence d'une couche externe d'aluminiure de 10 à 15 µm, voire 20µm, sur une couche interne de composés intermétalliques de l'ordre de 10µm.

Ainsi, il est donc possible de réaliser un revêtement d'aluminiure modifié par du platine à partir d'une peinture réalisant le dépôt de platine.

## Revendications

1. Procédé de fabrication ou de réparation d'un revêtement formant barrière thermique sur un substrat métallique en superalliage, **caractérisé en ce que** l'obtention dudit revêtement comprend la formation d'une pré-couche sur le substrat, ou sur une sous-couche de liaison du revêtement placée sur le substrat, par application d'une ou de plusieurs couches d'une peinture contenant au moins un métal choisi parmi le groupe constitué des métaux de la mine du platine (platinoïdes) et du chrome, ladite sous-couche de liaison étant du type alliage de type MCrAlY, M étant un métal choisi parmi le nickel, le cobalt, le fer ou un mélange de ces métaux, ladite sous-couche étant modifiée par formation, à sa surface, de ladite pré-couche par application d'une ou de plusieurs couches d'une peinture contenant au moins un métal choisi parmi le groupe constitué des métaux de la mine du platine (platinoïdes) et du chrome, puis traitement thermique de diffusion.

2. Procédé de fabrication ou de réparation d'un revêtement formant barrière thermique sur un substrat métallique en superalliage, **caractérisé en ce que** l'obtention dudit revêtement comprend la formation d'une pré-couche sur le substrat, ou sur une sous-couche de liaison du revêtement placée sur le substrat, par application d'une ou de plusieurs couches d'une peinture contenant au moins un métal choisi parmi le groupe constitué des métaux de la mine du platine (platinoïdes) et du chrome, ledit revêtement comportant un aluminiure du métal choisi résultant des étapes suivantes :
a) formation de la pré-couche sur le substrat par application d'une ou de plusieurs couches d'une peinture contenant au moins un métal choisi parmi le groupe constitué des métaux de la mine du platine (platinoïdes) et du chrome, et
b) aluminisation en phase vapeur sur la pré-couche, ce par quoi on obtient ledit aluminiure du métal choisi.

3. Procédé de réparation selon la revendication 2, **caractérisé en ce que** ledit revêtement à réparer est de type C1A obtenu par un dépôt préalable de chrome sur le substrat suivi d'une étape d'aluminisation en phase vapeur sur le chrome, et **en ce que** dans la ou les zones à réparer du revêtement, on procède selon les étapes suivantes :
a) retrait complet du revêtement altéré mettant à nu le substrat,
b) formation de ladite pré-couche sur le substrat par application d'une ou de plusieurs couches d'une peinture contenant au moins un métal choisi parmi le groupe constitué des métaux de la mine du platine (platinoïdes) et du chrome, et
c) aluminisation en phase vapeur sur la pré-couche, ce par quoi on obtient ledit aluminiure du métal choisi.

4. Procédé selon l'une quelconque des revendications précédentes, **caractérisé en ce que** ledit métal choisi est du platine.

5. Procédé selon l'une quelconque des revendications précédentes, **caractérisé en ce que** ladite pré-couche est formée avec une épaisseur comprise entre 1 et 30 µm, de préférence entre 2 et 10 µm.

6. Procédé selon l'une quelconque des revendications précédentes, **caractérisé en ce que** ladite pré-couche est formée par application de ladite peinture au pinceau, au pistolet, au tampon et/ou par immersion (au trempé).

## Patentansprüche

1. Verfahren zur Herstellung oder Reparatur einer Beschichtung, die eine Wärmesperre bildet, auf einem metallischen Substrat aus Superlegierung, **dadurch gekennzeichnet, dass** das Erhalten der Beschichtung das Bilden einer Vorschicht auf dem Substrat oder auf einer Subschicht zum Verbinden der Beschichtung, die auf dem Substrat angeordnet ist, durch Auftragen einer oder mehrerer Schichten einer Farbe, die mindestens ein Metall enthält, ausgewählt aus der Gruppe bestehend aus Metallen der Platingruppe (Platinoide) und Chrom, umfasst, wobei es sich bei der Subschicht zum Verbinden um eine Legierung vom Typ MCrAIY handelt, wobei M ein Metall ist, das aus Nickel, Kobalt, Eisen oder einer Mischung dieser Metalle ausgewählt ist, wobei die Subschicht durch Bilden einer oder mehrerer Schichten einer Farbe, die mindestens ein Metall enthält, ausgewählt aus der Gruppe bestehend aus Metallen der Platingruppe (Platinoide) und Chrom, auf ihrer Oberfläche und anschließende Wärmediffusionsbehandlung modifiziert wird.

2. Verfahren zur Herstellung oder Reparatur einer Beschichtung, die eine Wärmesperre bildet, auf einem metallischen Substrat aus Superlegierung, **dadurch gekennzeichnet, dass** das Erhalten der Beschichtung das Bilden einer Vorschicht auf dem Substrat oder auf einer Subschicht zum Verbinden der Beschichtung, die auf dem Substrat angeordnet ist, durch Auftragen einer oder mehrerer Schichten einer Farbe, die mindestens ein Metall enthält, ausgewählt aus der Gruppe bestehend aus Metallen der Platingruppe (Platinoide) und Chrom, umfasst, wobei die Beschichtung ein Aluminid des ausgewählten Metalls umfasst, das sich aus den folgenden Schritten ergibt:
a) Bilden einer Vorschicht auf dem Substrat durch Auftragen einer oder mehrerer Schichten einer Farbe, die mindestens ein Metall enthält, ausgewählt aus der Gruppe bestehend aus Metallen der Platingruppe (Platinoide) und Chrom, und
b) Dampfphasenaluminisierung auf der Vorschicht, wodurch das Aluminid des ausgewählten Metalls erhalten wird.

3. Verfahren zur Reparatur nach Anspruch 2, **dadurch gekennzeichnet, dass** die zu reparierende Beschichtung vom Typ C1A ist, erhalten durch eine vorherige Abscheidung von Chrom auf dem Substrat, gefolgt von einem Schritt zur Dampfphasenaluminisierung auf dem Chrom, und dass in dem oder den zu reparierenden Bereichen der Beschichtung die folgenden Schritte durchgeführt werden:
a) vollständige Entfernung der beeinträchtigten Beschichtung, sodass das Substrat freigelegt wird,
b) Bilden der Vorschicht auf dem Substrat durch Auftragen einer oder mehrerer Schichten einer Farbe, die mindestens ein Metall enthält, ausgewählt aus der Gruppe bestehend aus Metallen der Platingruppe (Platinoide) und Chrom, und
c) Dampfphasenaluminisierung auf der Vorschicht, wodurch das Aluminid des ausgewählten Metalls erhalten wird.

4. Verfahren nach einem der vorstehenden Ansprüche, **dadurch gekennzeichnet, dass** es sich bei dem ausgewählten Metall um Platin handelt.

5. Verfahren nach einem der vorstehenden Ansprüche, **dadurch gekennzeichnet, dass** die Vorschicht mit einer Dicke zwischen 1 und 30 µm, bevorzugt zwischen 2 und 10 µm, ausgebildet ist.

6. Verfahren nach einem der vorstehenden Ansprüche, **dadurch gekennzeichnet, dass** die Vorschicht durch Auftragen der Farbe mittels Streichen, Sprühen, Tamponieren und/oder Eintauchen (Tauchen) gebildet wird.

## Claims

1. A method of manufacturing or repairing a coating forming a thermal barrier on a metallic substrate formed from a superalloy, **characterized in that** production of said coating comprises forming a pre-layer on the substrate, or on a binding sub-layer of the coating placed on the substrate, by applying one or more layers of a paint containing at least one metal selected from the group constituted by platinum class metals (platinoids) and chromium, said binding sub-layer being an alloy of the MCrAlY type, M being a metal selected from nickel, cobalt, iron and a mixture of said metals, said sub-layer being modified by forming said pre-layer on its surface by applying one or more layers of a paint containing at least one metal selected from the group constituted by platinum class metals (platinoids) and chromium, then by diffusion heat treatment.

2. A manufacturing method or repairing a coating forming a thermal barrier on a metallic substrate formed from a superalloy, **characterized in that** production of said coating comprises forming a pre-layer on the substrate or on a binding sub-layer of the coating placed on the substrate by applying one or more layers of a paint containing at least one metal selected from the group constituted by platinum class metals (platinoids) and chromium, said coating comprising an aluminide of the selected metal resulting from carrying out the following steps:
a) forming a pre-layer on the substrate by applying one or more layers of a paint containing at least one metal selected from the group constituted by platinum class metals (platinoids) and chromium; and
b) vapor aluminizing onto the pre-layer, to obtain said aluminide of the selected metal.

3. A repair method according to claim 2, **characterized in that** said coating to be repaired is of the C1A type obtained by prior deposition of chromium onto the substrate followed by a step of vapor aluminizing onto the chromium, and **in that** the following steps are carried out in the zone or zones of the coating to be repaired:
a) completely removing the spoilt coating down to the bare substrate;
b) forming said pre-layer on the substrate by applying one or more layers of a paint containing at least one metal selected from the group constituted by platinum class metals (platinoids) and chromium; and
c) vapor aluminizing onto the pre-layer, to obtain said aluminide of the selected metal.

4. A method according to any preceding claims, **characterized in that** said metal is platinum.

5. A method according to any preceding claims, **characterized in that** said pre-layer is formed with a thickness in the range 1 µm to 30 µm, preferably in the range 2 µm to 10 µm.

6. A method according to any preceding claims, **characterized in that** said pre-layer is formed by applying said paint using a brush, a spray gun, a pad, and/or by immersion (dip-coating).
